# EUROPEAN PATENT SPECIFICATION

(11) **EP 3 970 109 B1**
(45) Date of publication and mention of the grant of the patent: **08.07.2026**
(21) Application number: 20731288.5
(22) Date of filing: 17.05.2020
(51) Int. Cl.: G06Q 40/08, G07C 5/00, G06Q 50/40

(54) **SYSTEMS AND METHOD FOR CALCULATING LIABILITY OF A DRIVER OF A VEHICLE**
SYSTEME UND VERFAHREN ZUR BERECHNUNG DER HAFTUNG EINES FAHRZEUGFÜHRERS
SYSTÈMES ET PROCÉDÉ DE CALCUL DE RESPONSABILITÉ D'UN CONDUCTEUR D'UN VÉHICULE

(30) Priority: 17.05.2019 US 201962849763 P
(43) Date of publication of application: 23.03.2022
(60) Divisional application: 25219221.6
(73) Proprietor: Moter Technologies, Inc., Torrance, CA 90501 (US)
(72) Inventor: FUJII, Kenji, Rancho Palos Verdes, CA 90275 (US); FISCHER, Michael, Redondo Beach, CA 90278 (US); LOZOFSKY, Craig, Encino, CA 91436 (US); SHIMAMURA, Toshiyuki, Torrance, CA 90503 (US); BROOKS, Daniel, Los Angeles, CA 90034 (US)
(74) Representative: Purdylucey Intellectual Property
(86) International application number: PCT/US2020/033324
(87) International publication number: WO 2020/236674

(56) References cited:
- WO-A1-2013/136156
- DE-A1- 102017 006 434
- US-A1- 2016 046 298
- US-A1- 2017 200 061
- US-A1- 2018 075 309

## Description

### PRIORITY CLAIM

This application claims priority to and the benefit of provisional patent application number 62/849,763, filed in the United States Patent and Trademark Office on May 17, 2019.

### TECHNICAL FIELD

The technology discussed below relates generally to systems, apparatuses, and methods for generating and calculating accident risk and operational costs of vehicles by rating the handling or performance of a vehicle by a driver. More specifically, a driving score of an individual is generated or calculated based at least on sensors, video input and artificial intelligence algorithms.

### BACKGROUND

Methods and systems exist for assessing a current driving situation using sensors on board a vehicle to provide the driver a warning of an accident before it happens to prevent the accident from occurring. Such methods and systems are disclosed in German Patent Application DE 10 2017 0063434 A1. Currently the insurance industry relies on complicated processes with duplicated systems and paperwork that is heavily reliant on human beings for handling claims. The claims handling process for insurance often include the steps (1) receiving an accident report; (2) communicating with customer and verifying policy information; (3) generating hand-written picture of the accident which is sent to a claim handling department; (4) claim department contacting customer to re-confirm accident information; and (5) manually entering the information into a claim handling system.

After the claim has been entered into the system, an assessor must examine the damaged vehicle that is the subject of the claim to verify the facts and determine a cost estimate. If a bodily injury is reported a face-to-face interview with the injured is conducted. Next, the assessor manually checks similar accidents for expected costs and a fault ratio is determined and payment is made to the respective parties. Systems that monitor drivers are known from documents US2018/075309A1 or US2017/200061A1.

The process described above requires a lot of manual processing and review which increases the costs to the insurance company and causes delays in reaching a settlement. Furthermore, the accuracy and neutrality of the process will vary depending on which assessor is assigned to the claim. In view of the above, what is needed are automated systems and methods that streamline the claims process, increases the turnaround time, and provides neutrality to the process.

### BRIEF SUMMARY OF SOME EXAMPLES

The following presents a summary of one or more aspects of the present disclosure, in order to provide a basic understanding of such aspects. This summary is not an extensive overview of all contemplated features of the disclosure and is intended neither to identify key or critical elements of all aspects of the disclosure nor to delineate the scope of any or all aspects of the disclosure. Its sole purpose is to present some concepts of one or more aspects of the disclosure in a form as a prelude to the more detailed description that is presented later.

In one aspect, the disclosure provides one or more non-transitory computer-readable media storing computer-executable instructions that upon execution cause one or more processors to perform acts. These acts include receiving performance data relating to a performance of a driver of a vehicle from multiple sources; identifying at least one risky event affecting the performance of the driver, wherein the at least one risky event negatively impacts the performance data to fall below a predetermined threshold; analyzing the performance data using a trained machine learning model to determine a severity level for each identified risky event affecting the performance of the driver, the trained machine learning model employing multiple types of machine learning algorithms to analyze the performance data; generating at least one score based on the performance data for presentation via a user interface; and refining the machine learning model based the at least one score generated, the refining including retraining the machine learning model based on at least one of a training corpus that is modified based on the performance data.

The acts may further include notifying at least one user of the at least one score via the user interface; triggering recording of video data using a camera on-board the vehicle; and analyzing the recorded video data using vehicle threshold events to identify the at least one risky event.

The acts may further include identifying an object outside the vehicle from the recorded video affecting the performance data using an object detection algorithm; and transmitting latitude and longitude coordinates of the identified object to a diagnostic module processor for further processing to determine an effect of the object on the at least one risky event.

The acts may further include triggering storing of vehicle data from a diagnostic module, an engine control unit module, and a self-driving module; and analyzing the stored vehicle data vehicle threshold events to identify the at least one risky event.

The acts may further include determining an occurrence of an accident from the performance data; and transmitting information related to the accident to a third party.

The acts may further include updating the least one score based after the severity level has been assigned to the at least one risky event; storing the updated score on an on-board memory device located on the vehicle; and transmitting the updated score to a remote data database.

According to another aspect, a computer-implemented method for assessing the risks of a driver is provided. The method includes receiving, at a processor on a vehicle module on-board a vehicle, performance data relating to a performance of a driver of a vehicle from multiple sources on-board the vehicle; identifying, by the processor on the vehicle module, at least one risky event affecting the performance of the driver, wherein the at least one risky event negatively impacts the performance data to fall below a predetermined threshold; analyzing the performance data using a trained machine learning model within the processor on the vehicle module to determine a severity level for each identified risky event affecting the performance of the driver, the trained machine learning model employing multiple types of machine learning algorithms to analyze the performance data; generating, by the processor on the vehicle module, at least one score based on the performance data for presentation via a user interface; and refining the machine learning model, on the processor of the vehicle module, based the at least one score generated, the refining including retraining the machine learning model based on at least one of a training corpus that is modified based on the performance data.

According to yet another aspect, a computing device on-board a vehicle is provided. The device includes an interface and a processing circuit coupled to the interface. The processor is configured to receive performance data relating to a performance of a driver of a vehicle from multiple sources; identify at least one risky event affecting the performance of the driver, wherein the at least one risky event negatively impacts the performance data to fall below a predetermined threshold; analyze the performance data using a trained machine learning model to determine a severity level for each identified risky event affecting the performance of the driver, the trained machine learning model employing multiple types of machine learning algorithms to analyze the performance data; generate at least one score based on the performance data for presentation to a user; and refine the machine learning model based the at least one score generated, the refining including retraining the machine learning model based on at least one of a training corpus that is modified based on the performance data.

### BRIEF DESCRIPTION OF THE DRAWINGS

Various features, nature, and advantages may become apparent from the detailed description set forth below when taken in conjunction with the drawings in which like reference characters identify correspondingly throughout.
FIG. 1 is a conceptual diagram illustrating an operational environment within which embodiments of the systems and methods of the present disclosure may be found.
FIG. 2 is a block diagram illustrating an example hardware implementation for a vehicle module in accordance with some aspects of the disclosure.
FIG. 3 is a block diagram illustrating an example hardware implementation for a user interface module and a data platform module in accordance with some aspects of the disclosure.
FIG. 4 is a block diagram illustrating an example hardware implementation for an apparatus (e.g., an electronic device) that can support communication in accordance with some aspects of the disclosure.
FIG. 5 illustrates a block diagram of an example hardware implementation of a data platform module/apparatus configured to communicate according to one or more aspects of the disclosure.
FIG. 6 illustrates a block diagram of an example hardware implementation of a user interface module/apparatus configured to communicate according to one or more aspects of the disclosure.
FIG. 7 is a flow diagram illustrating an exemplary method for calculating a driver score of a driver of a vehicle.
FIG. 8 is a flow diagram illustrating an exemplary method for determining the safety of a driver and a vehicle.
FIG. 9 is a diagram summarizing the overall process of the insurance system as it pertains to insurance.
FIG. 10 is a diagram depicting the process of detecting event.
FIG. 11 is a diagram depicting a process to use the data from several device sensors to improve the accuracy of location and motion estimates for vehicles and objects at the time of a detected event.
FIG. 12 is a diagram depicting how an incident report would be used to assign fault to entities involved.
FIG. 13 is a diagram showing a process for reducing the amount of manual work to subrogate claims and payout for involved parties.

### DETAILED DESCRIPTION

### Overview

Exemplary systems, apparatus, and methods of generating or calculating liability and operational costs of a vehicle based on a driver's handling and performance of the vehicle are described herein. Using a combination of vehicle sensors, video input, and on-board artificial intelligence and/or machine learning algorithms, the systems and methods of the present disclosure can identify risky events performed by the driver of a vehicle and generate, calculate, and evaluate driving scores and trip scores for the driver of the vehicle and send the calculations to one or more entities. The First Notice of Loss (FNOL) process, which is the initial report made to an insurance provider following loss, theft, or damage of an insured assets, is also automated for greater accuracy, response times, and lower operational cost.

The term "sensor" may refer to any type of known sensor for sensing the dynamic conditions of a vehicle. The sensors can be stock equipment or after-market tools. The sensors can include, but are not limited to, mass airflow sensors, engine speed sensors, oxygen sensors, spark knock sensors, coolant sensors, manifold absolute pressure (MAF) sensors, fuel temperature sensors, voltage sensors, camshaft position sensors, throttle position sensors, vehicle speed sensors or speedometers, proximity sensors, accelerometers, Global Positioning Systems, odometer, steering angle sensors, safety system data, radio detection and ranging (RADAR), light detection and ranging (LIDAR) and diagnostic trouble codes.

The terms "sensor data" and "vehicle sensor data" may refer to data received from any sensor on the car whether it is stock equipment or after-market tools.

The term "vehicle" may refer to any type of machine that transports people or cargo including, but not limited to, cars, trucks, buses, motorcycles, airplanes, and helicopters.

The term "risky event" may refer to any occurrence or incident that happens while driving that will negatively affect the performance of the driver and may include, but is not limited to, braking at a certain speed, accelerating at a certain speed, a tailgate time before a collision, corning at a certain speed, trip time, trip mileage, failing to stop at a stop sign, a rolling stop, a full stop, speeding miles, cost of the trip, start time of trip, stop time of trip, trip status, and trip score.

Several methods described herein may be implemented in hardware, such as a server, user interface or device, vehicle module and data module. Each of these devices may be determine if a risky event has occurred, generate a driver score and transmit accident data to emergency response vehicles by cellular and/or other network communications.

The term "computer-readable medium" as used herein refers to any tangible storage that participates in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, or any other medium from which a computer can read. When the computer-readable media is configured as a database, it is to be understood that the database may be any type of database, such as relational, hierarchical, object-oriented, and/or the like. Accordingly, the disclosure is considered to include a tangible storage medium and prior art-recognized equivalents and successor media, in which the software implementations of the present disclosure are stored.

The terms "central processing unit", "processor", "processor circuit", and "processing circuit", and variations thereof, as used herein, are used interchangeably and include, but are not limited to, a general purpose processor, a digital signal processor (DSP), an application-specific integrated circuit (ASIC), a field programmable gate array (FPGA) or other programmable logic component, discrete gate or transistor logic, discrete hardware components, or any combination thereof designed to perform the functions described herein. A general purpose processor may include a microprocessor, as well as any conventional processor, controller, microcontroller, or state machine. The processor may also be implemented as a combination of computing components, such as a combination of a DSP and a microprocessor, a number of microprocessors, one or more microprocessors in conjunction with a DSP core, an ASIC and a microprocessor, or any other number of varying configurations. These examples of the processors are for illustration and other suitable configurations within the scope of the disclosure are also contemplated. Furthermore, the processor may be implemented as one or more processors, one or more controllers, and/or other structure configured to execute executable programming.

The terms "determine," "calculate," and "compute," and variations thereof, as used herein, are used interchangeably and include any type of methodology, process, mathematical operation or technique.

The term "module" as used herein refers to any known or later developed hardware, software, firmware, artificial intelligence, fuzzy logic, or combination of hardware and software that is capable of performing the functionality associated with that element.

The terms "user interface" and "user interface module" could embody or be implemented within a server, a personal computer, a mobile phone, a smart phone, a tablet, a portable computer, a machine, an entertainment device, or any other electronic device having circuitry. The system described herein can identify and draw bounding boxes around various objects. These objects include, but are not limited to, a person, bicycle, car, motorcycle, bus, train, truck, boat, traffic light, fire hydrant, stop sign, and a dog.

The term "driver" may refer to a person or the vehicle with the self-driving feature engaged.

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts. As used herein, a reference to an element in the singular contemplates the reference to the element in the plural.

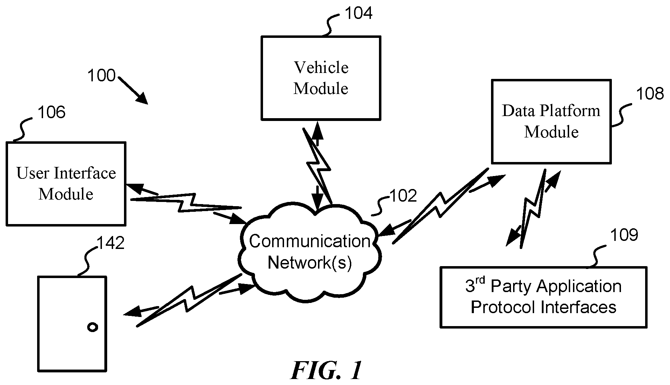

FIG. 1 illustrates an example architecture 100 for generating or calculating liability and operational costs of a vehicle based on a driver's handling or performance of the vehicle within which embodiments of the systems and methods of the present disclosure may be found. The system includes a communication network 102 that connects a vehicle module 104, a user interface module 106, a data platform 108 and a remote file system or server 142. Third-Party Application Protocol Interfaces 109 can access data generated on the vehicle module 104 and the data platform 108. The vehicle module 104, the user interface 106, the data platform 108, remote file system or server 142 and the Third-Party Application Protocol Interfaces 109 are described in more detail below.

The system 100 calculates one or more risk scores for a driver's handling of a vehicle using data obtained from the vehicle. The data is obtained from a combination of vehicle sensors, video input, and on-board artificial intelligence/machine learning.

In some embodiments, the system 100 may interact with the local data storage device 112 and/or the remote server 142, or any combination of local and remote data storage devices and file systems. A local file system (and/or remote file system) may control how data in the local data storage device 112 and/or remote data storage device 142 is stored and retrieved. In some embodiments, the structure and logic rules used to manage the groups of information stored as data in the local data storage device 112 and/or remote data storage device 142 is stored and retrieved. In some embodiments, the structure and logic rules used to manage the groups of information stored as data in the local data storage device 112 and/or remote data storage device 142 may be referred to as a "file system" (e.g., local file system and/or remote file system). The local file system and/or remote file system may each have a different structure and logic, properties of speed, flexibility, security, size and more. In some embodiments, the structure and logic of the local file system and/or remote file system provide for improved speed and security over other known file systems. The local data storage device and/or remote data storage device may use the same or different media on which data may be stored. Examples of media include magnetic discs, magnetic tapes, optical discs, and electronic memory (such as flash memory).

Communication between any or all of the apparatus, devices, systems, functions, modules, and services and servers described herein may be made through one or more wired and/or wireless communication network(s). Examples of communication network(s) include a public switched telephone network (PSTN), a wide area network (WAN), a local area network (LAN), a TCP/IP data network such as the Internet, and a wireless network such as the 3G, 4G, LTE, and 5G networks promulgated by the Third Generation Partnership Project (3GPP). The communication networks(s) 134 may be any one or combination of two or more communication networks such as, but not limited to, the just-mentioned communication networks.

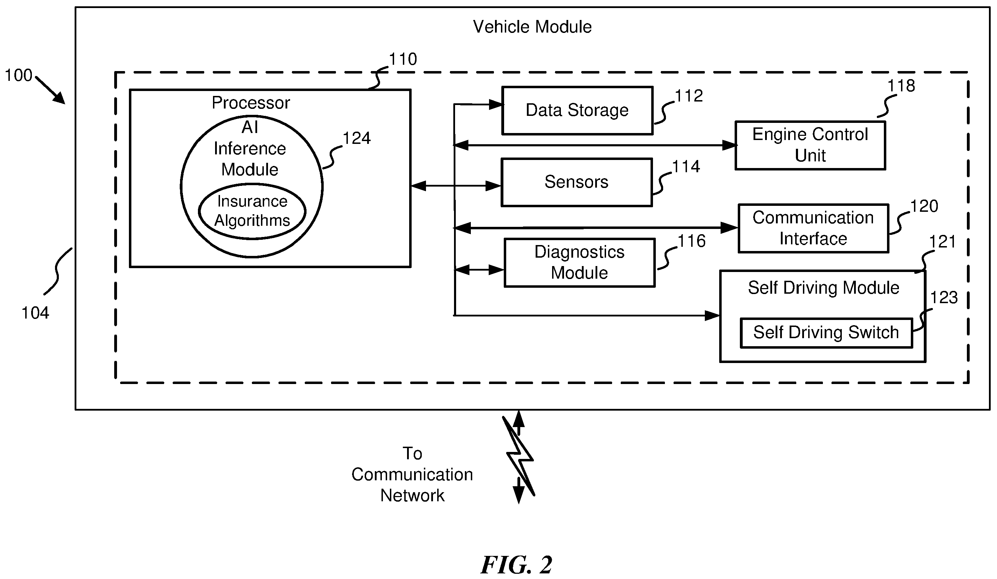

FIG. 2 is a block diagram illustrating an example hardware implementation for an on-board vehicle module in accordance with some aspects of the disclosure. The vehicle module 104 monitors the actions of a driver in a vehicle. In accordance with at least some embodiments, the vehicle module 104 may comprise a processor 110, a local data storage 112, one or more sensors 114, a diagnostics module 116, an engine control unit (ECU) 118, a communication interface 120, and a self-driving module 121 having a self-driving switch 123 for tracking when the self-driving feature of the vehicle, if available, is engaged, when it was engaged, whether the driver or the vehicle engaged the self-driving feature, and when the self-driving feature was disengaged. The information as to whether or not the self-driving feature was engaged can be used to determine if the risky event was caused by the driver or by the vehicle.

The vehicle module 104 gathers driver data using the various sensors 114 provided in the vehicle (e.g., speed sensors, accelerometers, GPS locators, tire pressure sensors, self-driving sensors, and Audio/Visual sensors, such as backup cameras, and anti-theft theft devices) that are typically connected to the ECU via a Controller Area Network (CAN) bus for example. From the vehicle sensor data and/or video meta data gathered, the processor 110 computes the gathered data into scores using an artificial intelligence and/or machine learning module 124 based on insurance machine learning algorithms and an extensive data collection and analysis previously gathered to calculate a driving score that includes risk and safety for a particular trip.

According to one aspect, the system can determine what vehicle sensors are available and can disable modules and sensors, as necessary. As the system disables modules and sensors, it adjusts the risk calculations, accordingly, taking into account how much data is available. With each vehicle trip summary, the system can output a score for the trip and an overall trip severity. Over time, the system can construct a risk profile for a driver based on an average trip score. This score can use the risk profile to estimate the costs and risks to the vehicle itself, as well as assess the driver of the vehicle.

The vehicle module 104 is also provisioned with a network communication interface 120 to permit communication via a wireless communication link to the communication network 102 with the user interface 106, the data platform 108 and the server 142 connected to the communication network 102.

The machine learning module 124 is comprised of at least one insurance machine learning algorithm to analyze the data from the sensors 114, diagnostics module 116, engine control unit 118 and self-driving module 121 to generate driver scores and trip information. In various embodiments, the machine learning module 124 uses a machine learning training pipeline to generate a machine learning model.

The diagnostics module 116 may save data to and retrieve data from the on-board memory or local data storage 112 related to the vehicle's self-diagnostic and reporting capability. The diagnostics module 116 may analyze the data received, diagnose potential problems, and prepare data for presentation to a user, driver, insurance company or other entity. The diagnostics module 116 may communicate with the user interface module 106 and the data platform module 108 via the communication interface 120. The diagnostics module 106 may receive commands/instructions, via the communication interface 120 or processor 110, to retrieve and/or generate the appropriate information and provide it to the data platform module 108 for presentation to a user, driver, insurance company or other entity.

The ECU 118 controls a series of actuators on an internal combustion engine to ensure optimal engine performance by reading values from sensors within the engine bay. It interprets the data using multidimensional performance maps (called lookup tables) and adjusts the engine actuators. The ECU 118 can monitor and set the air-fuel mixture, the ignition timing, and the idle speed, for example. The data from the ECU 118 is provided to the machine learning module 124 for use with machine learning algorithms and prior collected data to calculate driver risk scores based on the driving actions of the driver.

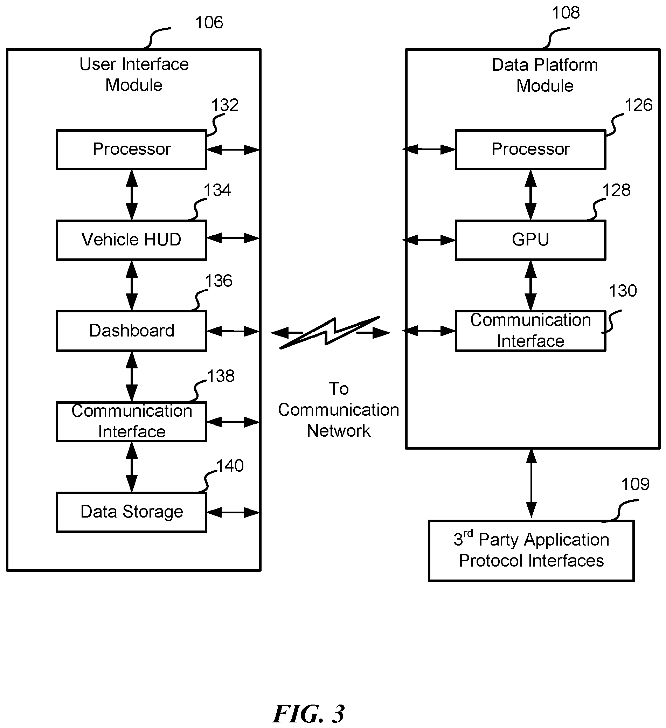

FIG. 3 is a block diagram illustrating an example hardware implementation for the user interface module 106 and the data platform module 108 in accordance with some aspects of the disclosure. The user interface module 106 allows third parties to obtain vehicle and driver data information as a result of an accident/anomaly analysis, a fault liability assignment, a payment subrogation, and claim payments The information can be sent to drivers and insurance companies through different user interfaces based upon API connections configured to accept the outputs from the insurance system.

The user interface module 106 may include a processor 132, a vehicle heads-up display (HUD) module 134, a dashboard module 136, a communication interface 138, and a memory or data storage module 140. The user interface module allows a user to load and process sensor data that is provided directly to the machine learning module 124 (See FIG. 2).

The user interface module 106 allows external or third parties to receive event and anomalous behavior data. When the user interface module 106 establishes a connection, using its communication interface, to an API on the user interface module 106 to retrieve the data stored in the local memory or remote data storage 142. The vehicle HUD module 136 and the dashboard module 136 on the user interface module 106 allow the user to view the data.

The user interface module 106 is connected to the communication network 104 and, therefore, may also be considered a networked computing device. The user interface 106 may comprise a network or communication interface 138 or multiple network interfaces that enable the user interface module106 to communicate across various types of communication networks. For instance, the user interface module 106 may include a Network Interface Card, an antenna, an antenna driver, an Ethernet port, or the like. Other examples of user interface modules 106 include, without limitation, laptops, tablets, cellular phones, Personal Digital Assistants (PDAs), thin clients, super computers, servers, proxy servers, communication switches, Set Top Boxes (STBs), smart TVs, etc. The processor 110 computes the gathered data using artificial intelligence and/or machine learning module124 based on insurance machine learning algorithms and an extensive data collection and analysis previously gathered to calculate a driving score that includes risk and safety for a particular trip. That is, the machine learning module 124 uses the on-board machine learning methods to locally (on the vehicle module) compute scores (such as a driver score, trip score, and risk score) based on the ingested vehicle sensor and video data, evaluated against extensive, previously collected datasets. Once the scores and trip summary have been completed, the vehicle module 102 established a connection with the networked servers and transmits the data allowing a user to evaluate the driver's performance against established datasets.

Turning to the data platform module 108, it has higher compute and memory capability relative to on-vehicle processing systems in the vehicle module 104. This data platform 108 is used to further process data sent to it to add additional accuracy for estimated outcomes by using algorithms that are difficult to run on vehicles due to performance, cost, or physical size constraints. Additionally, the data platform module 108 houses processes allowing communication with 3rd parties for: a) requesting data from other vehicles or devices; b) collecting data from other vehicles or devices; and/or c) communicating with other vehicle or devices. Further, this data platform 108 includes a processor 126, graphic processing unit (GPU) 128 and a communication interface 130 allowing communication with 3rd parties for: a) requesting data from other vehicles or devices; b) collecting data from other vehicles or devices; and/or c) communicating with other vehicles or devices.

According to one example, the system may retain up to 60 seconds of video data at a time using the GPU. When the system detects a risky event, the GPU may save 10 seconds of video before and after the risky event on the on-board storage of the vehicle module. The data may be retained to enable the system to rebuild the video clips and telemetry data around an event as it occurs, and it is observed. The system may update the remote data storage or server with trip data at regular intervals. Regular intervals may include, but are not limited to, the start of a trip, the end of a trip and every 10 second of the trip.

Information as a result of: a) accident/anomaly analysis, b) fault liability assignment, c) payment subrogation, and/or d) claim payments; can be sent to the driver and insurance company through different user interfaces based upon an API connections configured to accept the outputs from the insurance system.

The GPU inputs can be received from vehicle cameras, such as dashboard cameras and driving assistance cameras. Upon activation of a dashboard camera, the system verifies that the module is operational by taking a camera shot. If the system fails to take a camera shot, an attempt may be made again every 0.01 seconds, for example. If the system detects that the camera is not working or that video capture is closed, it sends a kill command to the subprocess that analyzes and processes the video capture. The video may be processed locally on the vehicle or it may be processed on a separate device.

The user interface 106 is connected to the communication network 104 and, therefore, may also be considered a networked computing device. The user interface 106 may comprise a network or communication interface 138 or multiple network interfaces that enable the user interface 106 to communicate across various types of communication networks. For instance, the user interface 106 may include a Network Interface Card, an antenna, an antenna driver, an Ethernet port, or the like. Other examples of user interface 106 include, without limitation, laptops, tablets, cellular phones, Personal Digital Assistants (PDAs), thin clients, super computers, servers, proxy servers, communication switches, Set Top Boxes (STBs), smart TVs, etc.

A risky event is detected by monitoring the data observed by the vehicle sensors or CAN bus. When system observes sensory data approaching predetermined threshold levels or risk patterns matching models simulated by machine learning, the system records a risky or abnormal situation. Upon recording the risky or abnormal situation, the system sensor modules filter the event data and any available video recordings and pass them to the modules handling the scoring models.

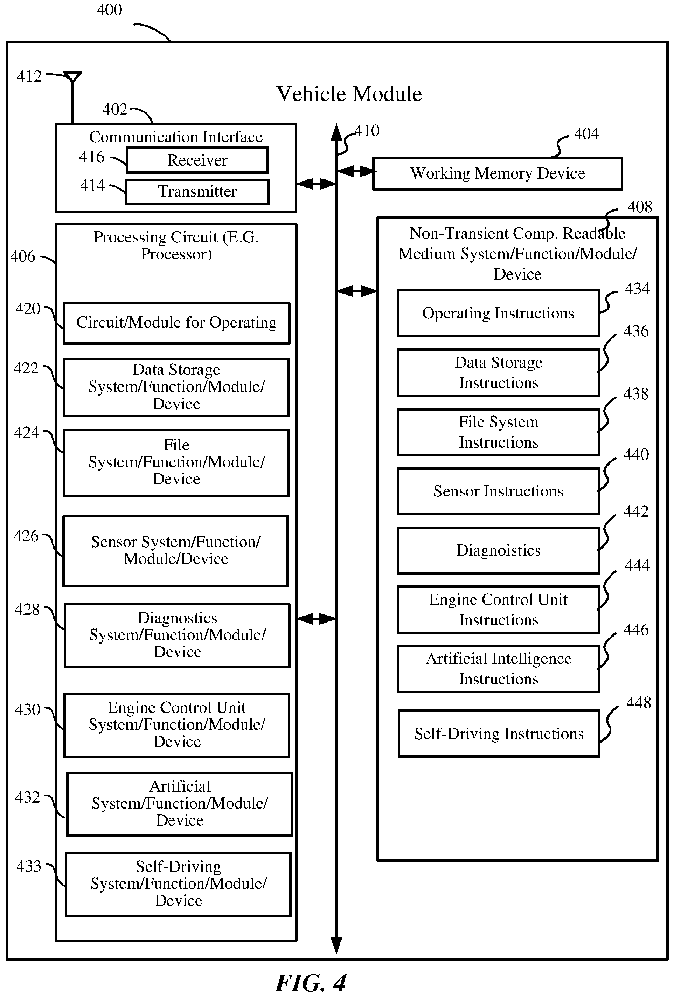

FIG. 4 illustrates a block diagram of an example hardware implementation of a vehicle module/apparatus 400 configured to communicate according to one or more aspects of the disclosure. The vehicle module 400 may include, for example, a communication interface 402. The communication interface 402 may enable data and control input and output. The communication interface 402 may, for example, enable communication over one or more communication networks, similar to communication network(s) 102 of FIG. 1. The communication interface 402 may be communicatively coupled, directly or indirectly, to the communication network(s) 102. The vehicle module 400 may include a local working memory device 404, and a processor system/function/module/device (hereinafter the processor 406). The processor 406 may use the working memory device 404 to store data that is about to be operated on, being operated on, or was recently operated on. The processor 406 may store instructions on the working memory device 404 and/or on one or more other memory structures or devices, such as, for example, non-transient computer readable medium system/function/module/device (hereinafter the non-transient computer readable medium 408). When executed by the processor 406, the instructions may cause the processor 406 to perform, for example, one or more aspects of the methods described herein.

The vehicle module 400 may be implemented with a bus architecture, represented generally by the bus 410. The bus 410 may include any number of interconnecting buses and bridges depending on the specific application of the vehicle module 400 and overall design constraints. The bus 410 may communicatively couple various circuits including one or more processors (represented generally by the processor 406), the working memory device 404, the communication interface 402, and the non-transient computer readable medium 408. The bus 410 may also link various other circuits and devices, such as timing sources, peripherals, voltage regulators, and power management circuits and devices, which are well known in the art, and therefore, are not described any further.

The communication interface 402 provides a means for communicating with other apparatuses over a transmission medium. In some implementations, the communication interface 402 includes circuitry and/or programming adapted to facilitate the communication of information bi-directionally with respect to one or more communication devices in a network. In some implementations, the communication interface 402 is adapted to facilitate wireless communication of the vehicle module 400. In these implementations, the communication interface 402 may be coupled to one or more antennas 412 as shown in FIG. 4 for wireless communication within a wireless communication system. In some implementations, the communication interface 402 may be configured for wire-based communication. For example, the communication interface 402 could be a bus interface, a send/receive interface, or some other type of signal interface including drivers, buffers, or other circuitry for outputting and/or obtaining signals (e.g., outputting signal from and/or receiving signals into an integrated circuit). The communication interface 402 can be configured with one or more standalone receivers and/or transmitters, as well as one or more transceivers. In the illustrated example, the communication interface 402 includes a transmitter 414 and a receiver 416. The communication interface 402 serves as one example of a means for receiving and/or means transmitting.

The processor 406 may be responsible for managing the bus 410 and general processing, including the execution of software stored on the non-transient computer readable medium 408. The software, when executed by the processor 406, may cause the processor 406 to perform the various functions described below for any particular apparatus or module. The non-transient computer readable medium 408 and the working memory device 404 may also be used for storing data that is manipulated by the processor 406 when executing software.

One or more processors, such as processor 406 in the vehicle module 400 may execute software. Software may be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a non-transient computer readable medium, such as non-transient computer readable medium 408. Non-transient computer readable medium 408 may include, by way of example, a magnetic storage device (e.g., hard disk, floppy disk, magnetic tape, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable non-transient medium for storing software, date, and/or instructions that may be accessed and read by a computer or the processor 406. Computer readable media may also include, by way of example, a carrier wave, a transmission line, and any other suitable medium for transmitting software and/or instructions that may be accessed and read by a computer or the processor 406. The non-transient computer readable medium 408 may reside in the vehicle module 400 (e.g., local data storage device 112, FIG. 1), external to the vehicle module 400 (e.g., remote data storage device 142, or distributed across multiple entities including the vehicle module 400.

The processor 406 is arranged to obtain, process and/or send data, control data access and storage, issue commands, and control other desired operations. The processor 406 may include circuitry configured to implement desired programming provided by appropriate media in at least one example.

The non-transient computer readable medium 408 may be embodied in a computer program product. By way of example, a computer program product may include a computer readable medium in packaging materials. Those skilled in the art will recognize how best to implement the described functionality presented throughout this disclosure depending on the particular application and the overall design constraints imposed on the overall system.

In some aspects of the disclosure, the processor 406 may include circuitry configured for various functions. For example, the processor 406 may include a circuit/module for operating 420 and configured to manage operation of the sensors and display and to perform input/output operations associated with access to the Internet web and perform, for example, methods described herein. For example, the processor 406 may include a data storage 422 system/function/module/device configured to store data including data including but not limited to sensory data, event data, threshold levels, video data, driver data, score data and previously collected data sets. For example, the processor 406 may include a file system/function/module/device 424 configured to control how data in local data storage and/or remote data storage is stored and retrieved. For example, the processor 406 may include a sensor system/function/module/device 426 configured to control sensor input and video input. For example, the processor 406 may include a diagnostics a system/function/module/device 428 configured to serve, for example, email accounts and process email messages and bundle emails for transmission to retrieve and store a vehicle's self-reported data, recorded video, and to perform, for example, methods described herein. For example, the processor 406 may include an engine control unit system/function/module/device 430 configured to control one or more electrical systems of subsystems in a vehicle to external servers, and to perform, for example, methods described herein. For example, the processor 406 may include an artificial intelligence system/function/module/device 432 configured to build a model of prior usage. For example, the processor 406 may include self-driving system/function/module/device 432 configured to determine if the self-driving system of the car was engaged at the time of the risky event and whether the driver engaged the self-driving system or the vehicle engaged the self-driving feature.

In some aspects of the disclosure, the non-transient computer readable medium 408 of the vehicle module 400 may include instructions that may cause the various systems/functions/modules/devices of the processor 406 to perform the methods described herein. For example, the non-transient computer readable medium 408 may include operating instructions or code 420 to the circuit/module for operating 420. For example, the non-transient computer readable medium 408 may include a data storage instructions 436 corresponding to the data storage system/function/module/device 422. For example, the non-transient computer readable medium 408 may include file system instructions 438 corresponding to the file system/function/module/device 424. For example, the non-transient computer readable medium 408 may include sensor instructions 440 corresponding to the sensor system/function/module/device 426. For example, the non-transient computer readable medium 408 may include diagnostic instructions 442 corresponding to the engine control unit system/function/module/device 430. For example, the non-transient computer readable medium 408 may include engine control unit instructions 444 corresponding to the engine control unit system/function/module/device 430. For example, the non-transient computer readable medium 408 may include artificial intelligence instructions 446 corresponding to the artificial intelligence system/function/module/device 432. For example, the non-transient computer readable medium 408 may include self-driving instructions 446 corresponding to the self-driving system/function/module/device 433.

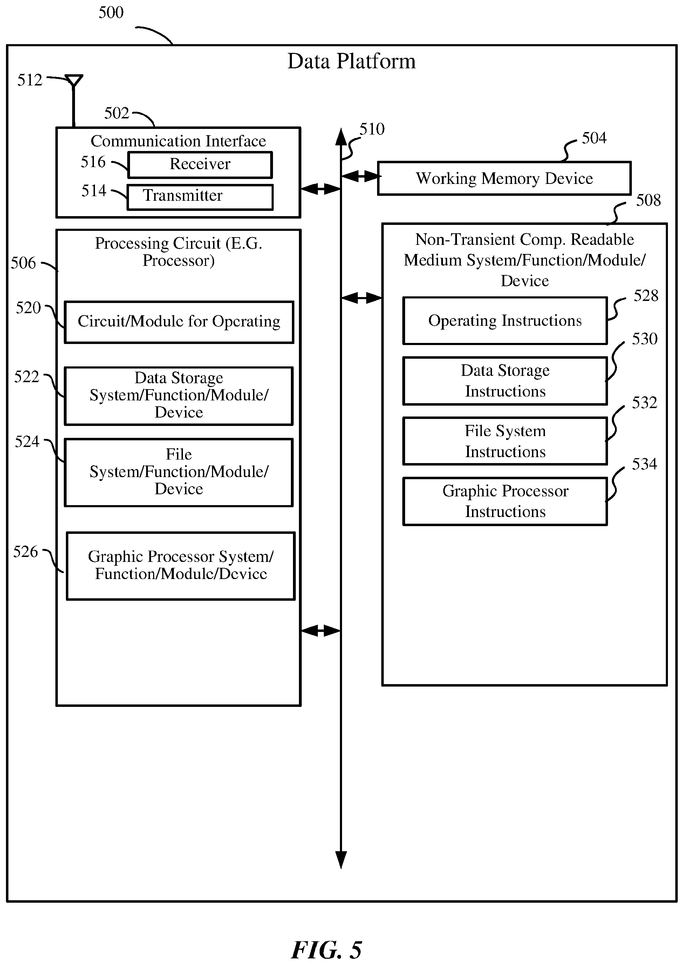

FIG. 5 illustrates a block diagram of an example hardware implementation of a data platform module/apparatus 500 configured to communicate according to one or more aspects of the disclosure. The data platform module 500 may include, for example, a communication interface 502. The communication interface 502 may enable data and control input and output. The communication interface 502 may, for example, enable communication over one or more communication networks, similar to communication network(s) 102 of FIG. 1. The communication interface 502 may be communicatively coupled, directly or indirectly, to the communication network(s) 102. The data platform module 500 may include a working memory device 504, and a processor system/function/module/device (hereinafter the processor 506). The processor 506 may use the working memory device 504 to store data that is about to be operated on, being operated on, or was recently operated on. The processor 506 may store instructions on the working memory device 504 and/or on one or more other memory structures or devices, such as, for example, non-transient computer readable medium system/function/module/device (hereinafter the non-transient computer readable medium 508). When executed by the processor 506, the instructions may cause the processor 506 to perform, for example, one or more aspects of the methods described herein.

The data platform module 500 may be implemented with a bus architecture, represented generally by the bus 510. The bus 510 may include any number of interconnecting buses and bridges depending on the specific application of the data platform module 500 and overall design constraints. The bus 510 may communicatively couple various circuits including one or more processors (represented generally by the processor 506), the working memory device 504, the communication interface 502, and the non-transient computer readable medium 508. The bus 510 may also link various other circuits and devices, such as timing sources, peripherals, voltage regulators, and power management circuits and devices, which are well known in the art, and therefore, are not described any further.

The communication interface 502 provides a means for communicating with other apparatuses over a transmission medium. In some implementations, the communication interface 502 includes circuitry and/or programming adapted to facilitate the communication of information bi-directionally with respect to one or more communication devices in a network. In some implementations, the communication interface 502 is adapted to facilitate wireless communication of the data platform module 500. In these implementations, the communication interface 502 may be coupled to one or more antennas 512 as shown in FIG. 5 for wireless communication within a wireless communication system. In some implementations, the communication interface 502 may be configured for wire-based communication. For example, the communication interface 502 could be a bus interface, a send/receive interface, or some other type of signal interface including drivers, buffers, or other circuitry for outputting and/or obtaining signals (e.g., outputting signal from and/or receiving signals into an integrated circuit). The communication interface 502 can be configured with one or more standalone receivers and/or transmitters, as well as one or more transceivers. In the illustrated example, the communication interface 502 includes a transmitter 514 and a receiver 516. The communication interface 502 serves as one example of a means for receiving and/or means transmitting.

The processor 506 may be responsible for managing the bus 510 and general processing, including the execution of software stored on the non-transient computer readable medium 508. The software, when executed by the processor 506, may cause the processor 506 to perform the various functions described below for any particular apparatus or module. The non-transient computer readable medium 508 and the working memory device 504 may also be used for storing data that is manipulated by the processor 506 when executing software.

One or more processors, such as processor 506 in the vehicle module 500 may execute software. Software may be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a non-transient computer readable medium, such as non-transient computer readable medium 508. Non-transient computer readable medium 508 may include, by way of example, a magnetic storage device (e.g., hard disk, floppy disk, magnetic tape, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable non-transient medium for storing software, date, and/or instructions that may be accessed and read by a computer or the processor 506. Computer readable media may also include, by way of example, a carrier wave, a transmission line, and any other suitable medium for transmitting software and/or instructions that may be accessed and read by a computer or the processor 506. The non-transient computer readable medium 508 may reside in the data platform module 500 (e.g., local data storage device 112, FIG. 1), external to the data platform module 500 (e.g., remote data storage device 142, or distributed across multiple entities including the data platform module 500.

The processor 506 is arranged to obtain, process and/or send data, control data access and storage, issue commands, and control other desired operations. The processor 506 may include circuitry configured to implement desired programming provided by appropriate media in at least one example.

The non-transient computer readable medium 508 may be embodied in a computer program product. By way of example, a computer program product may include a computer readable medium in packaging materials. Those skilled in the art will recognize how best to implement the described functionality presented throughout this disclosure depending on the particular application and the overall design constraints imposed on the overall system.

In some aspects of the disclosure, the processor 506 may include circuitry configured for various functions. For example, the processor 506 may include a circuit/module for operating 520 and configured to manage operation of data received from the vehicle module 104 (FIG. 1) and the user interface module 106 (FIG. 1) and to perform input/output operations associated with access to the Internet web and perform, for example, methods described herein. For example, the processor 506 may include a data storage 522 system/function/module/device configured to store data including data including but not limited to sensory data, event data, threshold levels, video data, driver data, score data and previously collected data sets. For example, the processor 506 may include a file system/function/module/device 524 configured to control how data in local data storage and/or remote data storage is stored and retrieved. For example, the processor 506 may include a Graphic Processor system/function/module/device 526 configured to control video input and output on cameras onboard the vehicle.

In some aspects of the disclosure, the non-transient computer readable medium 508 of the data platform module 500 may include instructions that may cause the various systems/functions/modules/devices of the processor 506 to perform the methods described herein. For example, the non-transient computer readable medium 508 may include operating instructions or code 528 to the circuit/module for operating 520. For example, the non-transient computer readable medium 508 may include a data storage instructions 530 corresponding to the data storage system/function/module/device 522. For example, the non-transient computer readable medium 508 may include file system instructions 532 corresponding to the file system/function/module/device 524. For example, the non-transient computer readable medium 508 may include graphic processor instructions 534 corresponding to the graphic processor system/function/module/device 526.

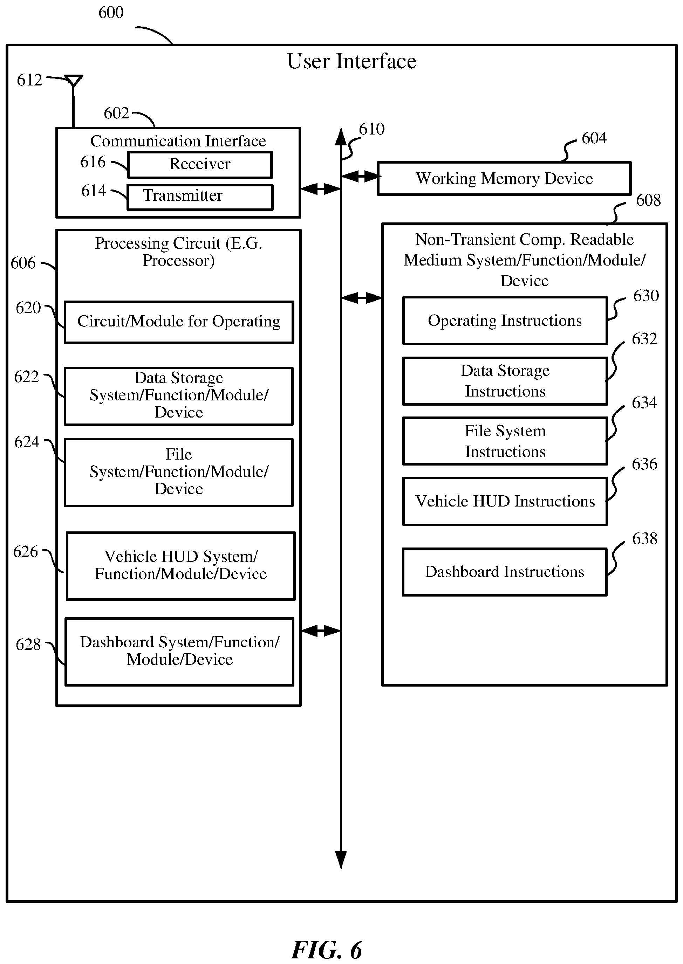

FIG. 6 illustrates a block diagram of an example hardware implementation of a user interface module/apparatus 600 configured to communicate according to one or more aspects of the disclosure. The user interface module 600 may include, for example, a communication interface 402. The communication interface 602 may enable data and control input and output. The communication interface 602 may, for example, enable communication over one or more communication networks, similar to communication network(s) 102 of FIG. 1. The communication interface 602 may be communicatively coupled, directly or indirectly, to the communication network(s) 102. The user interface module 600 may include a working memory device 604, and a processor system/function/module/device (hereinafter the processor 606). The processor 606 may use the working memory device 604 to store data that is about to be operated on, being operated on, or was recently operated on. The processor 606 may store instructions on the working memory device 604 and/or on one or more other memory structures or devices, such as, for example, non-transient computer readable medium system/function/module/device (hereinafter the non-transient computer readable medium 608). When executed by the processor 606, the instructions may cause the processor 606 to perform, for example, one or more aspects of the methods described herein.

The user interface module 600 may be implemented with a bus architecture, represented generally by the bus 610. The bus 610 may include any number of interconnecting buses and bridges depending on the specific application of the user interface module 600 and overall design constraints. The bus 610 may communicatively couple various circuits including one or more processors (represented generally by the processor 606), the working memory device 604, the communication interface 602, and the non-transient computer readable medium 608. The bus 610 may also link various other circuits and devices, such as timing sources, peripherals, voltage regulators, and power management circuits and devices, which are well known in the art, and therefore, are not described any further.

The communication interface 602 provides a means for communicating with other apparatuses over a transmission medium. In some implementations, the communication interface 602 includes circuitry and/or programming adapted to facilitate the communication of information bi-directionally with respect to one or more communication devices in a network. In some implementations, the communication interface 602 is adapted to facilitate wireless communication of the user interface module 600. In these implementations, the communication interface 602 may be coupled to one or more antennas 612 as shown in FIG. 6 for wireless communication within a wireless communication system. In some implementations, the communication interface 602 may be configured for wire-based communication. For example, the communication interface 602 could be a bus interface, a send/receive interface, or some other type of signal interface including drivers, buffers, or other circuitry for outputting and/or obtaining signals (e.g., outputting signal from and/or receiving signals into an integrated circuit). The communication interface 602 can be configured with one or more standalone receivers and/or transmitters, as well as one or more transceivers. In the illustrated example, the communication interface 602 includes a transmitter 614 and a receiver 616. The communication interface 602 serves as one example of a means for receiving and/or means transmitting.

The processor 606 may be responsible for managing the bus 610 and general processing, including the execution of software stored on the non-transient computer readable medium 608. The software, when executed by the processor 606, may cause the processor 606 to perform the various functions described below for any particular apparatus or module. The non-transient computer readable medium 608 and the working memory device 404 may also be used for storing data that is manipulated by the processor 606 when executing software.

One or more processors, such as processor 606 in the user interface module 600 may execute software. Software may be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a non-transient computer readable medium, such as non-transient computer readable medium 608. Non-transient computer readable medium 608 may include, by way of example, a magnetic storage device (e.g., hard disk, floppy disk, magnetic tape, magnetic strip), an optical disk (e.g., a compact disc (CD) or a digital versatile disc (DVD)), a smart card, a flash memory device (e.g., a card, a stick, or a key drive), a random access memory (RAM), a read only memory (ROM), a programmable ROM (PROM), an erasable PROM (EPROM), an electrically erasable PROM (EEPROM), a register, a removable disk, and any other suitable non-transient medium for storing software, date, and/or instructions that may be accessed and read by a computer or the processor 606. Computer readable media may also include, by way of example, a carrier wave, a transmission line, and any other suitable medium for transmitting software and/or instructions that may be accessed and read by a computer or the processor 606. The non-transient computer readable medium 608 may reside in the user interface module 600 (e.g., local data storage device 112, FIG. 1), external to the user interface module 600 (e.g., remote data storage device 142, or distributed across multiple entities including the user interface module 600.

The processor 606 is arranged to obtain, process and/or send data, control data access and storage, issue commands, and control other desired operations. The processor 606 may include circuitry configured to implement desired programming provided by appropriate media in at least one example.

The non-transient computer readable medium 608 may be embodied in a computer program product. By way of example, a computer program product may include a computer readable medium in packaging materials. Those skilled in the art will recognize how best to implement the described functionality presented throughout this disclosure depending on the particular application and the overall design constraints imposed on the overall system.

In some aspects of the disclosure, the processor 606 may include circuitry configured for various functions. For example, the processor 606 may include a circuit/module for operating 620 and configured to manage operation of data received from the vehicle module 104 (FIG. 1) and the data platform module 108 (FIG. 1) and to perform input/output operations associated with access to the Internet web and perform, for example, methods described herein. For example, the processor 606 may include a data storage 622 system/function/module/device configured to store data including data including but not limited to sensory data, event data, threshold levels, video data, driver data, score data and previously collected data sets. For example, the processor 606 may include a file system/function/module/device 624 configured to control how data in local data storage and/or remote data storage is stored and retrieved. For example, the processor 606 may include a vehicle HUD system/function/module/device 626 configured to video input and output. For example, the processor 606 may include a vehicle HUD system/function/module/device 626 configured to control automotive heads up displays on a vehicle.

In some aspects of the disclosure, the non-transient computer readable medium 608 of the user interface module 600 may include instructions that may cause the various systems/functions/modules/devices of the processor 606 to perform the methods described herein. For example, the non-transient computer readable medium 608 may include operating instructions or code 630 to the circuit/module for operating 620. For example, the non-transient computer readable medium 608 may include a data storage instructions 632 corresponding to the data storage system/function/module/device 622. For example, the non-transient computer readable medium 608 may include file system instructions 634 corresponding to the file system/function/module/device 624. For example, the non-transient computer readable medium 608 may include vehicle HUD instructions 636 corresponding to the vehicle HUD system/function/module/device 626. For example, the non-transient computer readable medium 608 may include dashboard instructions 638 corresponding to the vehicle HUD system/function/module/device 626.

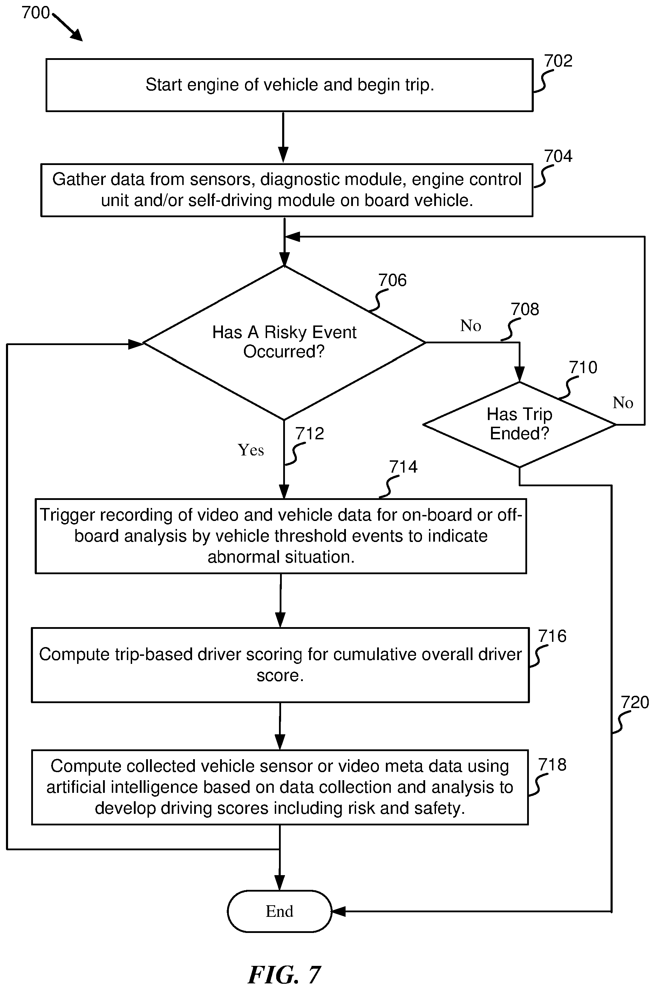

FIGS. 7-8 present illustrative processes for collecting data from a combination of vehicle sensors, video input, and on-board artificial intelligence and/or machine learning modules and generating, calculating and evaluating driving scores and trip information from the data for a driver of a vehicle where the driver is a person or the driver is the vehicle with the self-driving feature engaged. The processes can also send the calculations to one or more entities or allow one or more entities to retrieve the calculations. Each of the processes is illustrated as a collection of blocks in a logical flow chart, which represents a sequence of operations that can be implemented in hardware, software, or a combination thereof. In the context of software, the blocks represent computer-executable instructions that, when executed by one or more processors, perform the recited operations. Generally, computer-executable instructions may include routines, programs, objects, components, data structures, and the like that perform particular functions or implement particular abstract data types. The order in which the operations are described is not intended to be construed as a limitation, and any number of the described blocks can be combined in any order and/or in a mirror to implement the process. For discussion purposes, the processes herein are described with reference to the architecture 100 of FIGS. 1-3.

FIG. 7 is a flow diagram illustrating an exemplary method 700 for calculating a driver score of a driver of a vehicle. As defined above, the driver may be a person or the vehicle itself if the self-driving feature is engaged. The implementation of the driver score calculation process 700 may initially begin when an engine of a vehicle is started to begin a trip 702. As the vehicle progresses on the trip, the vehicle module on board the vehicle collects or gather data from sensors, the diagnostic module, the engine control unit, and/or the self-driving module 704. The vehicle module continually monitors for a risky event 706. If no risky event is detected 708, the vehicle module determines if the trip has ended 710.

If a risky event is detected 712, the vehicle module is triggered to record video and/or vehicle data for on-board and off-board analysis by vehicle threshold events to indicate an abnormal situation 714. According to one example, the vehicle module may use a 5-10 second window to determine the peak of the risky event. For example, if the driver suddenly brakes, the vehicle module may check the corresponding sensor data over a 10 second time frame to determine the time of the greatest deceleration. When the vehicle module determines that a risky event has occurred, a severity level between 0 and 3, (or between 0 and 4) for example, is assigned and the trip summary is updated. The trip summary may be transmitted to a remote database or server at the start and end of the trip as well as every 10 seconds as well as stored in the vehicle module on-board the vehicle. All the severity levels of the risky events detected over the course of the trip are used to calculate a trip severity that can be used to assess a trip score. According to one example, the system may automatically assume a trip severity of 4 for every minute of the trip where the trip score is a number from 0 - 100, after taking into consideration the trip's configured typical severity (or predetermined severity or threshold) and the actual severity per minute. Table 1 below identifies severity levels associated with risky events, according to one example. Table 1 is intended to be an illustrative and non-limiting example, other risky events and severity levels can be included.

**Table 1**

| **Event** | **Severity** |
|---|---|
| Braking over 6 MPH | 1 |
| Braking at half a gravitational force equivalent (half G-force) (10.97 MPH/s) | 2 |
| Braking at one G-force (21.94 MPH/s) | 3 |
| Acceleration at 6 MPH | 1 |
| Acceleration at half G-force | 2 |
| Acceleration at one G-force | 3 |
| Full stop, under 2 MPH/s | 0 |
| Rolling Stop, between 2 and 10 MPH/s | 0.5 |
| No stop | 3 |
| Tailgating with an estimated time to collision (TTC) of 1.5 - 1.0 seconds | 0.75 |
| Tailgating with a TTC of 1.0 - 0.5 seconds | 1.75 |
| Tailgating with a TTC of less than 0.5 seconds | 3 |

Upon detection of an event, the system may use the 60 seconds of video data to save 10 seconds of video before and 10 seconds after the event timestamp. The vehicle module then analyzes the recorded content and uses an object detection algorithm to draw boxes around each object it recognizes. After creating the object bounding boxes, the vehicle module sends the box coordinates to the processor for processing of risky events. In other words, the system may identify an object located outside of the vehicle that has affected the driving performance of the driver. The box identifies the object outside the vehicle from the recorded video affecting the performance data using an object detection algorithm. The latitude and longitude coordinates of the identified object are determined, and these coordinates may be transmitted to the diagnostic module processor for further processing to determine its effect of the driver performance.

Based on all the data gathered from the trip, the system computes a trip-based driver scoring for a cumulative overall driver score 716. Next, the system computes the collected vehicle sensor and/or video meta data using artificial intelligence and/or machine learning based on data collection and analysis to develop driving scores including scores for risk and safety 718. If no more risky events are detected and it is determined that the trip has ended 720, the system stops collecting data.

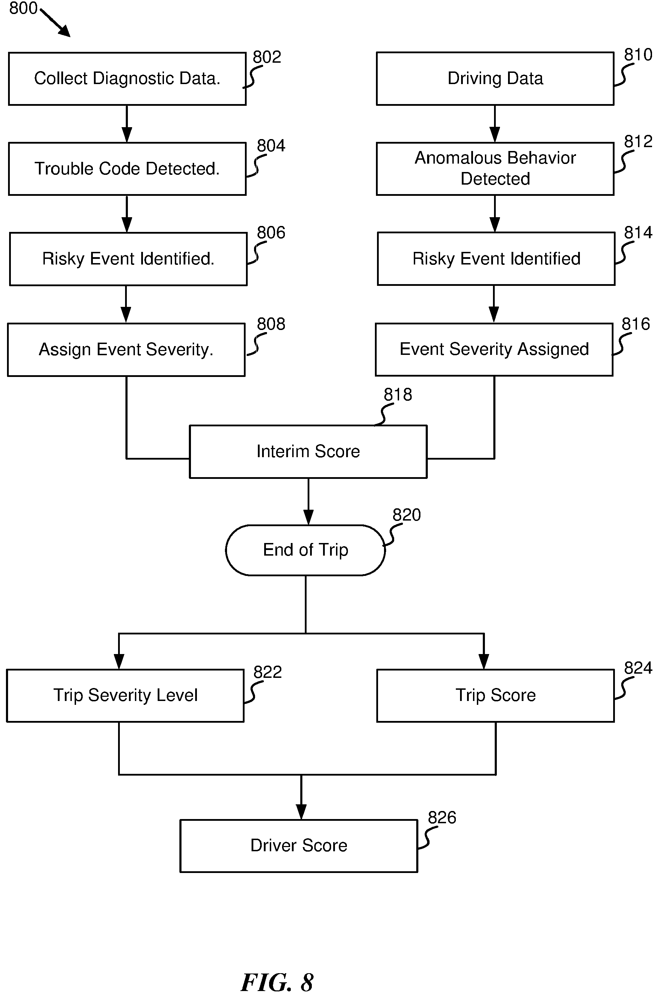

FIG. 8 is a flow diagram illustrating an exemplary method 800 for determining the safety of a driver and a vehicle. The implementation of the safety score calculation process 800 begins by gathering, collecting, and/or detecting data during the trip. As defined above, the driver may be a person or the vehicle itself if the self-driving feature is engaged. The diagnostic data is collected 802 and from the diagnostic data it is determined if any trouble codes occurred during the trip 804, any risky event data is identified 806 and severity levels to the risky events are assigned 808. The driving data is also collected 810 and from the driver data it is determined if any anomalous behavior was detected 812, any risky event data is identified 814 and severity levels to the risk events are assigned 816. Using the collected data, trouble codes detected risky events identified and assigned event severity levels, the system determines an interim score 818 while the trip is still in progress. Once the trip has ended 820, a trip severity is assigned 822 and a trip score is determined 824. Using the trip severity level and the trip score, the driver score is calculated 826.

Factors that may be analyzed in determining the trip score may include, but are not limited to, observed driver behavior, available vehicle safety systems, level of vehicle maintenance, and distance and hours traveled.

According to one aspect of the present disclosure, the system can, upon determining an anomaly of sufficient severity, contact and dispatch emergency response personnel and tow trucks, as well as assist those involved with selection of medical and vehicle repair facilities. The system can track the location and orientation of the vehicle. If an inertial measurement unit (IMU) is attached, the system processes the IMU data separately from the GPS samples, enabling the system to provide more vehicle details. The system can retrieve the following vehicle details from the GPS and IMU ever second: longitude, latitude, altitude, speed, direction, longitude error in meters, latitude error in meters, speed error in meters/second, altitude error in meters, and direction error in degrees.

The GPS module then processes the GPS data using an Unscented Kalman Localization Filter that helps increase precision and accuracy of the information the system receives. The localization filter itself makes an estimate of vehicle location based on speed and direction and checks it against the information received from the GPS. In areas of poor or low reception, the system may put less emphasis on GPS data and more on the localization filter predictions.

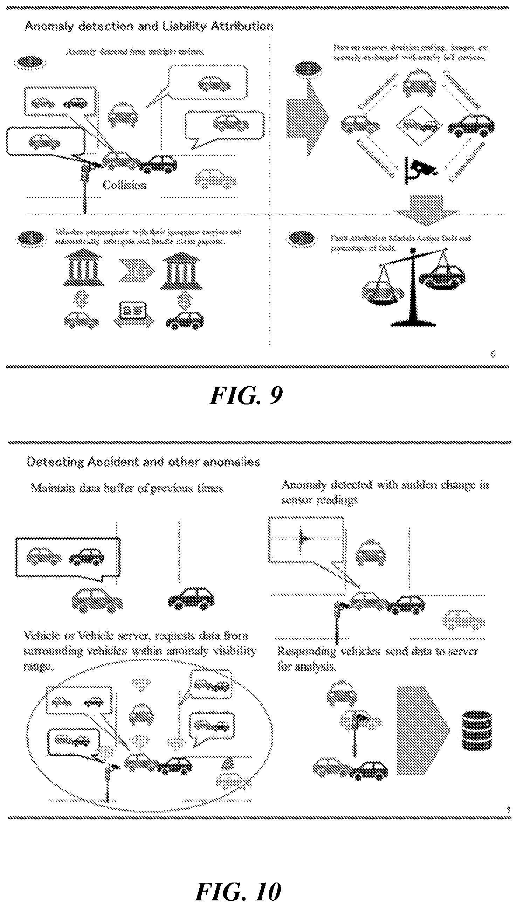

FIG. 9 is a diagram summarizing the overall process of the insurance system as it pertains to insurance. The 4 major processes that take place when an incident is detected are shown. The main processes show a) Detecting the accident and other anomalies; b) Anomaly reconstruction and Explanation; c) Incident cost and Fault Attribution; and d) Subrogation and Payout.

FIG. 10 is a diagram that shows the process for detecting an accident or anomaly, i.e. an incident. When driving, an allocated amount of data storage is set aside to retain 1 minute's worth of vehicle sensor information. When an accident or anomaly is detected an alert goes out to the surrounding vehicles and devices that could have seen the incident. The data from those vehicles and devices within range of likely visibility of the incident are sent to the insurance system data platform for further analysis.

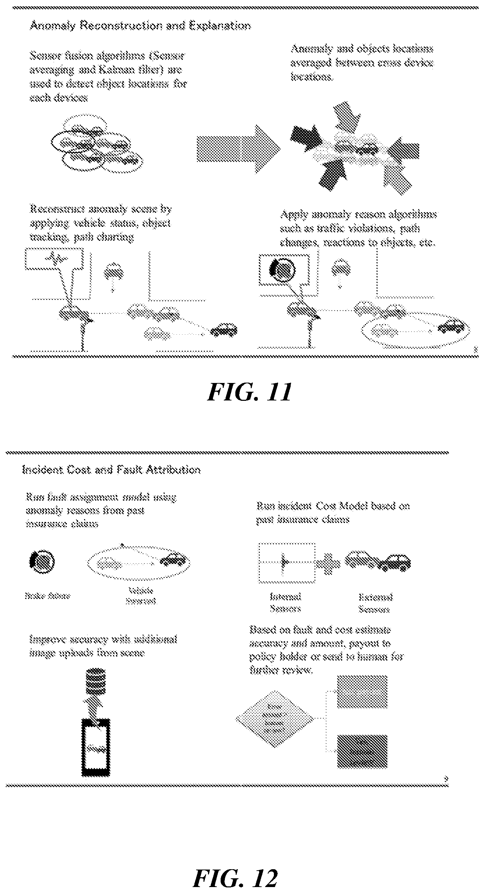

FIG. 11 is a diagram that shows the process to use the data from several device sensors to improve the accuracy of location and motion estimates for vehicles and objects at the time of the detected incident. This diagram also shows the process to reconstruct the activities of the objects that were detected by the device and vehicle sensor data such as showing path projections of the objects detected and any actions that could have led to the detected anomaly/accident. The result of this process is the creation of an incident report and event log of the activities which occurred.

FIG. 12 is a diagram which shows how the incident report can be used to assign fault to entities involved. A model trained on past insurance claim outcomes based on anomaly types is run on the incident report. This model assigns fault to the objects and entities detected at the location of incident along with any potential fault from contributing causes such as, but not limited to, parts manufactures, vehicle software makers, etc. After fault is assigned, costs are estimated from a model trained on past insurance claim information. If the driver or passenger takes photos by phone of the incident, these would be can uploaded to the insurance system data platform to run cost estimation models trained on incident images. Given the estimated cost and accuracy of cost estimates, it can be decided to either make payment to insured parties automatically or request a human agent to approve.

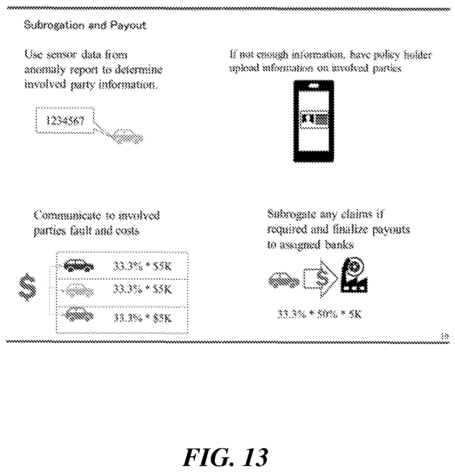

FIG. 13 is a diagram showing a process for reducing the amount of manual work to subrogate claims and payout for involved parties. First, using the data generated from the incident, an identification model on the detected objects is ran to detect vehicle license plate information for retrieving from remote databases the insurance carriers of involved parties. If that information was not sufficient for identifying involved parties, then individuals can take photos with their phone of drivers' licenses. Driver license images can be used by models trained to detect written letters and numbers in order to extract information on involved parties. Then, based on previous fault model outputs, parties identified, their insurance carriers would be notified of fault percentages. Based on fault ratios assigned, payments would be subrogated and involved parties would receive their claim payouts.

The above identified system can store accident data on the vehicle as well as on a device.

The above identified system can be used to adjust risk features calculations and anomaly detection to sensor and/or data inputs available.

The above identified system can be used for risk estimations and safety assessments of driver and vehicle for fleet management.

The above identified system can be used to transmit accident data after an accident to emergency response services by cellular and / or other network connections.

The above identified system can be used to estimate vehicle repair, insurance claims, and bodily injury from accident data.

The above identified system can be used for driver and/or vehicle safety analysis.

The above described system can apply to both the finance and the insurance industry. It can be used for residual value calculations for leasing and loans. The risk calculations and estimations generated can be used to determine behavior and vehicle mileage to estimate a residual value for the vehicle. The residual value may then be used to estimate leasing prices, fleet management sales, vehicle prices, auction pricing, and total loss insurance assessments. The estimated driver soccer and trip summaries can be used to calculate the cost of a trip per mile driven, changes to a driver's premium, and vehicle wear and tear.

### Conclusion

Within the present disclosure, the word "exemplary" is used to mean "serving as an example, instance, or illustration." Any implementation or aspect described herein as "exemplary" is not necessarily to be construed as preferred or advantageous over other aspects of the disclosure. Likewise, the term "aspects" does not require that all aspects of the disclosure include the discussed feature, advantage, or mode of operation. The term "coupled" is used herein to refer to the direct or indirect coupling between two objects. For example, if object A physically touches object B, and object B touches object C, then objects A and C may still be considered coupled to one another-even if they do not directly physically touch each other. For instance, a first object may be coupled to a second object even though the first object is never directly physically in contact with the second object. The terms "circuit" and "circuitry" are used broadly, and intended to include both hardware implementations of electrical devices and conductors that, when connected and configured, enable the performance of the functions described in the present disclosure, without limitation as to the type of electronic circuits, as well as software implementations of information and instructions that, when executed by a processor, enable the performance of the functions described in the present disclosure. The terms "at least one" and "one or more" may be used interchangeably herein.

Within the present disclosure, use of the construct "A and/or B" may mean "A or B or A and B" and may alternatively be expressed as "A, B, or a combination thereof" or "A, B, or both". Within the present disclosure, use of the construct "A, B, and/or C" may mean "A or B or C, or any combination thereof" and may alternatively be expressed as "A, B, C, or any combination thereof".

One or more of the components, steps, features and/or functions illustrated herein may be rearranged and/or combined into a single component, step, feature, or function or embodied in several components, steps, or functions. Additional elements, components, steps, and/or functions may also be added without departing from novel features disclosed herein. The apparatus, devices, and/or components illustrated herein may be configured to perform one or more of the methods, features, or steps described herein. The novel algorithms described herein may also be efficiently implemented in software and/or embedded in hardware.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein but are to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of:" a list of items refers to any combination of those items, including single members. As an example, "at least one of: a, b, or c" is intended to cover: a; b; c; a and b; a and c; b and c; and a, b and c. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for."

As used herein, the term "determining" encompasses a wide variety of actions. For example, "determining" may include calculating, computing, processing, deriving, investigating, looking up (e.g., looking up in a table, a database or another data structure), ascertaining, and the like. Also, "determining" may include receiving (e.g., receiving information), accessing (e.g., accessing data in a memory), and the like. Also, "determining" may include resolving, selecting, choosing, establishing, and the like.

While the foregoing disclosure shows illustrative aspects, it should be noted that various changes and modifications could be made herein without departing from the scope of the appended claims. The functions, steps or actions of the method claims in accordance with aspects described herein need not be performed in any particular order unless expressly stated otherwise. Furthermore, although elements may be described or claimed in the singular, the plural is contemplated unless limitation to the singular is explicitly stated.

## Claims

1. One or more non-transitory computer-readable media storing computer-executable instructions that upon execution cause one or more processors to perform acts comprising:
receiving performance data relating to a performance of a driver of a vehicle from one or more of: a plurality of sensors, a diagnostic module, an engine control unit module, and a self-driving module;
identifying using one or more processors (406) at least one risky event (712) by analyzing the performance data, wherein the performance data fails to meet at least one predetermined threshold during the at least one risky event;
analyzing using the one or more processors (406) the performance data, using a trained machine learning model to determine a numeric severity level for the at least one risky event, the trained machine learning model employing multiple types of machine learning algorithms to analyze the performance data (714);
when a current trip is complete, assigning, using the one or more processors (406), a trip severity level of the current trip using the numeric severity level of the at least one risky event;
determining, using the one or more processors (406), a trip score for the current trip using the trip severity level of the current trip;
generating, using the one or more processors (406), at least one driver score for presentation via a user interface (716), wherein the at least one driver score is generated using at least the trip score of the current trip, the trip severity level of the current trip, one or more other trip scores for one or more prior trips, and one or more other trip severity levels for the one or more prior trips; and
refining the trained machine learning model using the performance data the refining including retraining the trained machine learning model based on at least one of a training corpus that is modified based on the performance data (718).

2. The one or more non-transitory computer-readable media of claim 1, wherein the acts further comprise:
notifying at least one user of the at least one score via the user interface.

3. The one or more non-transitory computer-readable media of claim 1, wherein the performance data is selected from at least one of sensor data, data from a diagnostic module, data from an engine control unit module, and data from a self-driving module.

4. The one or more non-transitory computer-readable media of claim 1, wherein the acts further comprise:
triggering recording of video data using a camera on-board the vehicle; and
utilizing, via the vehicle module, an object detection algorithm to draw object bounding boxes around identified objects in the recorded video;
transmitting coordinates of the bounding boxes to the one or more processors, via a communication link between the camera and the one or more processors, for processing the at least one risky event;
analyzing, by the one or more processors, the performance data and the recorded video data to identify the at least one risky event, wherein the recorded video data includes the identified objects in the recorded video and the coordinates of the bounding boxes for the identified objects; and
transmitting using the communications interface the recorded video data to a data platform.

5. The one or more non-transitory computer-readable media of claim 4, wherein a memory device on-board the vehicle saves 10 seconds of the recorded video before and after the at least one risky event.

6. The one or more non-transitory computer-readable media of claim 4, wherein the acts further comprise:
identifying an object outside the vehicle from the recorded video affecting the performance data using an object detection algorithm; and
transmitting latitude and longitude coordinates of the identified object to a diagnostic module processor for further processing to determine an effect of the object on the at least one risky event.

7. The one or more non-transitory computer-readable media of claim 1, wherein the acts further comprise:
triggering storing of the performance data from the diagnostic module, the engine control unit module, and the self-driving module; and
analyzing the stored performance data to identify the at least one risky event.

8. The one or more non-transitory computer-readable media of claim 1, wherein the acts further comprise:
determining an occurrence of an accident from the performance data; and
transmitting information related to the accident to a third party.

9. The one or more non-transitory computer-readable media of claim 1, wherein the at least one driver score is generated on-board the vehicle.

10. The one or more non-transitory computer-readable media of claim 1, wherein the acts further comprise:
updating at least one score after the numeric severity level has been assigned to the at least one risky event;
storing the updated score on an on-board memory device located on the vehicle; and
transmitting the updated score to a remote data database.

11. The one or more non-transitory computer-readable media of claim 10, wherein the at least one score is the at least one driver score and the trip score.

12. A computer-implemented method, comprising:
receiving, at a processor (406) on a vehicle module (400) on-board a vehicle, performance data relating to a performance of a driver of a vehicle from multiple sources on-board the vehicle;
identifying, by the processor (406) on the vehicle module (400), at least one risky event affecting the performance of the driver, wherein the performance data fails to meet at least one predetermined threshold during the at least one risky event and/or the performance data matches a risk pattern model;
analyzing the performance data using a trained machine learning model (124) within the processor (406) on the vehicle module (400) to determine a severity level for the at least one identified risky event affecting the performance of the driver, the trained machine learning model (124) employing multiple types of machine learning algorithms to analyze the performance data;
when a current trip is complete, assigning, by the processor (406), a trip severity level for the current trip using the severity level of the at least one identified risky event and determining, by the processor (406), a final trip score for the current trip using the trip severity level; generating, by the processor on the vehicle module, at least one driver score, wherein the at least one driver score is generated using at least the final trip score for the current trip, the trip severity level for the current trip, one or more other trip scores for one or more prior trips, and one or more other trip severity levels for the one or more prior trips;
presenting the at least one driver score via a user interface (106); and
refining the trained machine learning model, on the processor of the vehicle module, based on the at least one driver score , the refining including retraining the trained machine learning model based on at least one of a training corpus that is modified based on the performance data.

13. The computer-implemented method of claim 12, further comprising:
triggering, by the processor (406), recording of video data using a camera on-board the vehicle; and
analyzing, by the processor (406), the recorded video data using vehicle threshold events to identify the at least one risky event.

14. The computer-implemented method of claim 13, further comprising:
identifying, by a diagnostic module (428) in communication with the on-board vehicle module (400), an object outside the vehicle from the recorded video affecting the performance data using an object detection algorithm;
transmitting latitude and longitude coordinates of the identified object to a diagnostic module processor for further processing to determine an effect of the identified object on the at least one risky event.

15. The computer-implemented method of claim 13, further comprising:
triggering, by the processor (406), storing of the performance data from a diagnostic module (428), an engine control unit module (430), and a self-driving module (432) on-board the vehicle; and
analyzing, by the processor (406), the stored performance data to identify the at least one risky event.

## Patentansprüche

1. Ein oder mehrere nicht-transitorische computerlesbare Speichermedien mit darauf gespeicherten computerausführbaren Instruktionen, die bei Ausführung einen oder mehrere Prozessoren veranlassen, Aktionen durchzuführen, die Folgendes umfassen:
Empfangen von Leistungsdaten bezüglich einer Leistung eines Fahrers eines Fahrzeugs von einer oder mehreren der folgenden Quellen: einer Mehrzahl von Sensoren, einem Diagnostikmodul, einem Motorsteuereinheitsmodul, und einem Selbstfahrmodul;
Identifizieren, unter Verwendung eines oder mehrerer Prozessoren (406), mindestens eines risikobehafteten Ereignisses (712) durch Analysieren der Leistungsdaten, wobei die Leistungsdaten mindestens eine vorherbestimmte Schwelle während des mindestens einen risikobehafteten Ereignisses zu erreichen verfehlen;
Analysieren, unter Verwendung des einen oder der mehreren Prozessoren (406), der Leistungsdaten unter Verwendung eines trainierten Maschinenlernmodells zum Bestimmen eines numerischen Schweregrades für das mindestens eine risikobehaftete Ereignis, wobei das trainierte Maschinenlernmodell mehrere Typen von Maschinenlernalgorithmen zum Analysieren der Leistungsdaten (714) einsetzt;
wenn eine aktuelle Fahrt abgeschlossen ist, Zuweisen, unter Verwendung des einen oder der mehreren Prozessoren (406), eines Fahrtschweregrades der aktuellen Fahrt unter Verwendung des numerischen Schweregrades des mindestens einen risikobehafteten Ereignisses;
Bestimmen, unter Verwendung des einen oder der mehreren Prozessoren (406), einer Fahrtbewertung für die aktuelle Fahrt unter Verwendung des Fahrtschweregrades der aktuellen Fahrt;
Erzeugen, unter Verwendung des einen oder der mehreren Prozessoren (406), mindestens einer Fahrerbewertung zur Darstellung über eine Benutzerschnittstelle (716), wobei die mindestens eine Fahrerbewertung unter Verwendung zumindest der Fahrtbewertung der aktuellen Fahrt, des Fahrtschweregrades der aktuellen Fahrt, einer oder mehrerer anderer Fahrtbewertungen für eine oder mehrere frühere Fahrten und eines oder mehrerer anderer Fahrtschweregrade für die eine oder mehreren früheren Fahrten erzeugt wird,
Verfeinern des trainierten Maschinenlernmodells unter Verwendung von Leistungsdaten, wobei das Verfeinern erneutes Trainieren des Maschinenlernmodells auf der Basis von mindestens einem eines Trainingskorpus, der auf der Basis der Leistungsdaten (718) modifiziert worden ist, einschließt.

2. Ein oder mehrere nicht-transitorische computerlesbare Medien nach Anspruch 1, wobei die Aktionen ferner Folgendes umfassen:
Benachrichtigen mindestens eines Benutzers über die mindestens eine Bewertung über die Benutzerschnittstelle.

3. Ein oder mehrere nicht-transitorische computerlesbare Medien nach Anspruch 1, wobei die Leistungsdaten aus mindestens einem der folgenden Datensätze ausgewählt werden: Sensordaten, Daten von einem Diagnostikmodul, Daten von einem Motorsteuereinheitsmodul und Daten von einem Selbstfahrmodul.

4. Ein oder mehrere nicht-transitorische computerlesbare Medien nach Anspruch 1, wobei die Aktionen ferner Folgendes umfassen:
Auslösen der Aufzeichnung von Videodaten unter Verwendung einer Kamera an Bord des Fahrzeugs; und
Verwenden, über das Fahrzeugmodul, eines Objekterkennungsalgorithmus zum Zeichnen von Objekteinfassungskästen um identifizierte Objekte im aufgezeichneten Video herum;
Übertragen von Koordinaten der Einfassungskästen an den einen oder die mehreren Prozessoren über eine Kommunikationsverbindung zwischen der Kamera und dem einen oder den mehreren Prozessoren zum Bearbeiten des mindestens einen risikobehafteten Ereignisses;
Analysieren, durch den einen oder die mehreren Prozessoren, der Leistungsdaten und der aufgezeichneten Videodaten zum Identifizieren des mindestens einen risikobehafteten Ereignisses, wobei die aufgezeichneten Videodaten die identifizierten Objekte im aufgezeichneten Video und die Koordinaten der Einfassungskästen der identifizierten Objekte einschließen; und
Übertragen, unter Verwendung der Kommunikationsschnittstelle, der aufgezeichneten Videodaten an eine Datenplattform.

5. Ein oder mehrere nicht-transitorische computerlesbare Medien nach Anspruch 4, wobei eine Arbeitsspeichervorrichtung an Bord des Fahrzeugs 10 Sekunden des aufgezeichneten Videos vor und nach dem mindestens einen risikobehafteten Ereignis speichert.

6. Ein oder mehrere nicht-transitorische computerlesbare Medien nach Anspruch 4, wobei die Aktionen ferner Folgendes umfassen:
Identifizieren eines Objekts, welches die Leistungsdaten beeinflusst, außerhalb des Fahrzeugs im aufgezeichneten Video unter Verwendung eines Objekterkennungsalgorithmus; und
Übertragen von Längen- und Breitenkoordinaten des identifizierten Objekts an einen Diagnostikmodulprozessor für weitere Bearbeitung zum Bestimmen einer Einwirkung des Objekts auf das mindestens eine risikobehaftete Ereignis.

7. Ein oder mehrere nicht-transitorische computerlesbare Medien nach Anspruch 1, wobei die Aktionen ferner Folgendes umfassen:
Auslösen des Speicherns der Leistungsdaten von dem Diagnostikmodul, dem Motorsteuereinheitsmodul und dem Selbstfahrmodul; und
Analysieren der gespeicherten Leistungsdaten zum Identifizieren des mindestens einen risikobehafteten Ereignisses.

8. Ein oder mehrere nicht-transitorische computerlesbare Medien nach Anspruch 1, wobei die Aktionen ferner Folgendes umfassen:
Bestimmen eines Auftretens eines Unfalls aus den Leistungsdaten; und
Übertragen von Information bezüglich des Unfalls an eine dritte Partei.

9. Ein oder mehrere nicht-transitorische computerlesbare Medien nach Anspruch 1, wobei die mindestens eine Fahrerbewertung an Bord des Fahrzeugs erzeugt wird.

10. Ein oder mehrere nicht-transitorische computerlesbare Medien nach Anspruch 1, wobei die Aktionen ferner Folgendes umfassen:
Aktualisieren der mindestens einen Bewertung auf der Basis, dass zuvor der numerischen Schweregrad auf das mindestens eine risikobehaftete Ereignis zugewiesen worden ist;
Speichern der aktualisierten Bewertung auf einer an Bord befindlichen Arbeitsspeichervorrichtung, die am Fahrzeug untergebracht ist; und
Übertragen der aktualisierten Bewertung an eine abgesetzt gelegene Datenbank.

11. Ein oder mehrere nicht-transitorische computerlesbare Medien nach Anspruch 10, wobei die mindestens eine Bewertung aus der einer mindestens einer Fahrerbewertung und der Fahrtbewertung besteht.

12. Computerimplementiertes Verfahren, Folgendes umfassend:
Empfangen, bei einem Prozessor (406) an einem Fahrzeugmodul (400) an Bord eines Fahrzeugs, von Leistungsdaten bezüglich einer Leistung eines Fahrers eines Fahrzeugs aus mehreren Quellen an Bord des Fahrzeugs;
Identifizieren, durch den Prozessor (406) an dem Fahrzeugmodul (400), mindestens eines auf die Leistung des Fahrers einwirkenden risikobehafteten Ereignisses, wobei die Leistungsdaten mindestens eine vorherbestimmte Schwelle während des mindestens einen risikobehafteten Ereignisses zu erreichen verfehlen und/oder die Leistungsdaten mit einem Risikomustermodell übereinstimmen;
Analysieren der Leistungsdaten unter Verwendung eines trainierten Maschinenlernmodells (124) innerhalb des Prozessors (406) am Fahrzeugmodul (400) zum Bestimmen eines Schweregrades für mindestens ein identifiziertes auf die Leistung des Fahrers einwirkendes risikobehaftetes Ereignis, wobei das trainierte Maschinenlernmodell (124) mehrere Typen von Maschinenlernalgorithmen zum Analysieren der Leistungsdaten einsetzt;
wenn eine aktuelle Fahrt abgeschlossen ist, Zuweisen, durch den Prozessor (406), eines Fahrtschweregrades für die aktuelle Fahrt unter Verwendung des Schweregrades des mindestens einen identifizierten risikobehafteten Ereignisses und Bestimmen, durch den Prozessor (406), einer abschließenden Fahrtbewertung für die aktuelle Fahrt unter Verwendung des Fahrtschweregrades;
Erzeugen, durch den Prozessor am Fahrzeugmodul, mindestens einer Fahrerbewertung, wobei die mindestens eine Fahrerbewertung unter Verwendung zumindest der abschließenden Fahrtbewertung für die aktuelle Fahrt, des Fahrtschweregrades für die aktuelle Fahrt, einer oder mehrerer anderer Fahrtbewertungen für eine oder mehrere frühere Fahrten und eines oder mehrerer anderer Fahrtschweregrade für die eine oder mehreren früheren Fahrten erzeugt wird;
Darstellen der mindestens einen Fahrerbewertung über die Benutzerschnittstelle (106); und
Verfeinern des trainierten Maschinenlernmodells, auf dem Prozessor des Fahrzeugmoduls, auf der Basis der mindestens einen Fahrerbewertung, wobei das Verfeinern erneutes Trainieren des trainierten Maschinenlernmodells auf der Basis von mindestens einem eines Trainingskorpus, der auf der Basis der Leistungsdaten modifiziert worden ist, einschließt.

13. Computerimplementiertes Verfahren nach Anspruch 12, ferner umfassend:
Auslösen, durch den Prozessor (406), der Aufzeichnung von Videodaten unter Verwendung einer Kamera an Bord des Fahrzeugs; und
Analysieren, durch den Prozessor (406), der aufgezeichneten Videodaten unter Verwendung von Fahrzeugschwellenereignissen zum Identifizieren des mindestens einen risikobehafteten Ereignisses.

14. Computerimplementiertes Verfahren nach Anspruch 13, ferner umfassend:
Identifizieren, durch ein Diagnostikmodul (428) in Kommunikation mit dem an Bord befindlichen Fahrzeugmodul (400), eines Objekts, welches die Leistungsdaten beeinflusst, außerhalb des Fahrzeugs im aufgezeichneten Video unter Verwendung eines Objekterkennungsalgorithmus;
Übertragen von Längen- und Breitenkoordinaten des identifizierten Objekts an einen Diagnostikmodulprozessor für weitere Bearbeitung zum Bestimmen einer Einwirkung des identifizierten Objekts auf das mindestens eine risikobehaftete Ereignis.

15. Computerimplementiertes Verfahren nach Anspruch 13, ferner umfassend:
Auslösen, durch den Prozessor (406), des Speicherns der Leistungsdaten von einem Diagnostikmodul (428), einem Motorsteuereinheitsmodul (430) und einem Selbstfahrmodul (432) an Bord des Fahrzeugs; und
Analysieren, durch den Prozessor (406), der gespeicherten Leistungsdaten zum Identifizieren des mindestens einen risikobehafteten Ereignisses.

## Revendications

1. Support(s) non transitoire(s) lisible(s) par ordinateur stockant des instructions exécutables par ordinateur qui, lorsqu'elles sont exécutées, amènent un ou plusieurs processeurs à réaliser les actions comprenant :
recevoir des données de performances relatives à des performances d'un conducteur d'un véhicule, en provenance d'un ou plusieurs éléments parmi : une pluralité de capteurs, un module de diagnostic, un module d'unité de commande de moteur et un module de conduite autonome ;
identifier, au moyen d'un ou plusieurs processeurs (406), au moins un événement à risque (712) en analysant les données de performances, les données de performances ne satisfaisant pas à au moins un seuil prédéterminé pendant l'au moins un événement à risque ;
analyser, au moyen des un ou plusieurs processeurs (406), les données de performances au moyen d'un modèle d'apprentissage automatique formé afin de déterminer un niveau de gravité numérique pour l'au moins un événement à risque, le modèle d'apprentissage automatique formé employant de multiples types d'algorithmes d'apprentissage automatique pour analyser les données de performances (714) ;
lorsqu'un trajet en cours est terminé, attribuer, au moyen des un ou plusieurs processeurs (406), un niveau de gravité de trajet du trajet en cours au moyen du niveau de gravité numérique de l'au moins un événement à risque ;
déterminer, au moyen des un ou plusieurs processeurs (406), un score de trajet pour le trajet en cours au moyen du niveau de gravité de trajet du trajet en cours ;
générer, au moyen des un ou plusieurs processeurs (406), au moins un score de conducteur à présenter par l'intermédiaire d'une interface d'utilisateur (716), l'au moins un score de conducteur étant généré au moyen, au moins, du score de trajet du trajet en cours, du niveau de gravité de trajet du trajet en cours, d'un ou plusieurs autres scores de trajet pour un ou plusieurs trajets antérieurs, et d'un ou plusieurs autres niveaux de gravité de trajet pour les un ou plusieurs trajets antérieurs ; et
affiner, au moyen de données de performances, le modèle d'apprentissage automatique formé, l'affinage comprenant la reformation du modèle d'apprentissage automatique sur la base d'au moins un d'un corpus de formation qui est modifié sur la base des données de performances (718).
s

2. Support(s) non transitoire(s) lisible(s) par ordinateur selon la revendication 1, les actions comprenant en outre :
notifier, par l'intermédiaire de l'interface d'utilisateur, l'au moins un score à au moins un utilisateur.

3. Support(s) non transitoire(s) lisible(s) par ordinateur selon la revendication 1, les données de performances étant sélectionnées parmi au moins un type de données parmi des données de capteur, des données en provenance d'un module de diagnostic, des données en provenance d'un module d'unité de commande de moteur et des données en provenance d'un module de conduite autonome.

4. Support(s) non transitoire(s) lisible(s) par ordinateur selon la revendication 1, les actions comprenant en outre :
déclencher l'enregistrement de données vidéo au moyen d'une caméra à bord du véhicule ; et
utiliser, par l'intermédiaire du module de véhicule, un algorithme de détection d'objets pour tracer des rectangles de délimitation d'objet autour d'objets identifiés dans la vidéo enregistrée ;
transmettre les coordonnées des rectangles de délimitation aux un ou plusieurs processeurs, par l'intermédiaire d'une liaison de communication entre la caméra et les un ou plusieurs processeurs, afin de traiter l'au moins un événement à risque ;
analyser, par les un ou plusieurs processeurs, les données de performances et les données vidéo enregistrées afin d'identifier l'au moins un événement à risque, les données vidéo enregistrées comprenant les objets identifiés dans la vidéo enregistrée et les coordonnées des rectangles de délimitation pour les objets identifiés ; et
transmettre, au moyen de l'interface de communication, les données vidéo enregistrées à une plateforme de données.

5. Support(s) non transitoire(s) lisible(s) par ordinateur selon la revendication 4, un dispositif de mémoire à bord du véhicule sauvegardant 10 secondes de la vidéo enregistrée avant et après l'au moins un événement à risque.

6. Support(s) non transitoire(s) lisible(s) par ordinateur selon la revendication 4, les actions comprenant en outre :
à partir de la vidéo enregistrée, identifier, au moyen d'un algorithme de détection d'objets, un objet à l'extérieur du véhicule affectant les données de performances ; et
transmettre les coordonnées de latitude et de longitude de l'objet identifié à un processeur de module de diagnostic en vue d'un traitement ultérieur afin de déterminer un effet de l'objet sur l'au moins un événement à risque.

7. Support(s) non transitoire(s) lisible(s) par ordinateur selon la revendication 1, les actions comprenant en outre :
déclencher le stockage des données de performances en provenance du module de diagnostic, du module d'unité de commande de moteur et du module de conduite autonome ; et
analyser les données de performances stockées afin d'identifier l'au moins un événement à risque.

8. Support(s) non transitoire(s) lisible(s) par ordinateur selon la revendication 1, les actions comprenant en outre :
déterminer une survenue d'un accident à partir des données de performances ; et
transmettre des informations relatives à l'accident à un tiers.

9. Support(s) non transitoire(s) lisible(s) par ordinateur selon la revendication 1, l'au moins un score de conducteur étant généré à bord du véhicule.

10. Support(s) non transitoire(s) lisible(s) par ordinateur selon la revendication 1, les actions comprenant en outre :
mettre à jour l'au moins un score après l'attribution du niveau numérique de gravité à l'au moins un événement à risque ;
stocker le score mis à jour sur un dispositif de mémoire embarqué situé sur le véhicule ; et
transmettre le score mis à jour à une base de données distante.

11. Support(s) non transitoire(s) lisible(s) par ordinateur selon la revendication 10, l'au moins un score étant un l'au moins score de conducteur et le score de trajet.

12. Procédé mis en œuvre par ordinateur, comprenant les étapes consistant à :
recevoir, au niveau d'un processeur (406) sur un module de véhicule (400) à bord d'un véhicule, des données de performances relatives à des performances d'un conducteur d'un véhicule, en provenance de multiples sources à bord du véhicule ;
identifier, par le processeur (406) sur le module de véhicule (400), au moins un événement à risque affectant les performances du conducteur, les données de performances ne satisfaisant pas à au moins un seuil prédéterminé pendant l'au moins un événement à risque et/ou les données de performances correspondant à un modèle de cycle de risque ;
analyser les données de performances au moyen d'un modèle d'apprentissage automatique formé (124) dans le processeur (406) sur le module de véhicule (400) afin de déterminer un niveau de gravité pour au moins un événement à risque identifié affectant les performances du conducteur, le modèle d'apprentissage automatique formé (124) employant de multiples types d'algorithmes d'apprentissage automatique pour analyser les données de performances ;
lorsqu'un trajet en cours est terminé, attribuer, par le processeur (406), un niveau de gravité de trajet pour le trajet en cours au moyen du niveau de gravité de l'au moins un événement à risque identifié et déterminer, par le processeur (406), un score de trajet final pour le trajet en cours au moyen du niveau de gravité de trajet ;
générer, par le processeur sur le module de véhicule, au moins un score de conducteur, l'au moins un score de conducteur étant généré au moyen, au moins, du score de trajet final pour le trajet en cours, du niveau de gravité de trajet pour le trajet en cours, d'un ou plusieurs autres scores de trajet pour un ou plusieurs trajets antérieurs, et d'un ou plusieurs autres niveaux de gravité de trajet pour les un ou plusieurs trajets antérieurs ;
présenter l'au moins un score de conducteur par l'intermédiaire d'une interface d'utilisateur (106) ; et
affiner le modèle d'apprentissage automatique formé, sur le processeur du module de véhicule, sur la base de l'au moins un score de conducteur, l'affinage comprenant l'étape consistant à reformer le modèle d'apprentissage automatique formé sur la base d'au moins un d'un corpus de formation qui est modifié sur la base des données de performances.

13. Procédé mis en œuvre par ordinateur selon la revendication 12, comprenant en outre les étapes consistant à :
déclencher, par le processeur (406), l'enregistrement de données vidéo au moyen d'une caméra à bord du véhicule ; et
analyser, par le processeur (406), les données vidéo enregistrées, au moyen d'événements seuils de véhicule afin d'identifier l'au moins un événement à risque.

14. Procédé mis en œuvre par ordinateur selon la revendication 13, comprenant en outre les étapes consistant à :
à partir de la vidéo enregistrée, identifier, par un module de diagnostic (428) en communication avec le module de véhicule embarqué (400), au moyen d'un algorithme de détection d'objets, un objet à l'extérieur du véhicule affectant les données de performances ;
transmettre les coordonnées de latitude et de longitude de l'objet identifié à un processeur de module de diagnostic en vue d'un traitement ultérieur afin de déterminer un effet de l'objet identifié sur l'au moins un événement à risque.

15. Procédé mis en œuvre par ordinateur selon la revendication 13, comprenant en outre les étapes consistant à :
déclencher, par le processeur (406), le stockage des données de performances en provenance d'un module de diagnostic (428), d'un module d'unité de commande de moteur (430) et d'un module de conduite autonome (432) à bord du véhicule ; et
analyser, par le processeur (406), les données de performances stockées afin d'identifier l'au moins un événement à risque.
